# FASCICULE DE BREVET EUROPEEN

(11) **EP 0 880 813 B1**
(45) Date de publication et mention de la délivrance du brevet: **10.03.2004**
(21) Numéro de dépôt: 97902135.9
(22) Date de dépôt: 17.02.1997
(51) Int. Cl.: H02J 7/35

(54) **APPAREIL ELECTRONIQUE (NOTAMMENT PIECE D'HORLOGERIE) AVEC UN DISPOSITIF DE CHARGE D'UN ACCUMULATEUR AU MOYEN D'UNE CELLULE PHOTOVOLTAIQUE**
ELECTRONISCHES GERÄT (INSBESONDERE UHRENEINHEIT) MIT EINER AKKULATORLADEVORRICHTUNG MIT PHOTOVOLTAISCHER ZELLE
ELECTRONIC APPARATUS (IN PARTICULAR TIMEPIECE) WITH A DEVICE FOR CHARGING A BATTERY USING A PHOTOVOLTAIC CELL

(30) Priorité: 16.02.1996 CH 41796; 20.03.1996 FR 9603451
(43) Date de publication de la demande: 02.12.1998
(73) Titulaire: ASULAB S.A., 2074 Marin (CH)
(72) Inventeur: SAURER, Eric, CH-2022 Bevaix (CH); FARINE, Pierre-André, CH-2003 Neuchâtel (CH)
(74) Mandataire: Ravenel, Thierry Gérard Louis
(86) Numéro de dépôt international: PCT/CH1997/000052
(87) Numéro de publication internationale: WO 1997/030503

(56) Documents cités:
- DE-A- 2 900 622
- GB-A- 2 149 942
- US-A- 3 448 575
- US-A- 4 240 021
- ELEKTRONIK, vol. 39, no. 9, 27 Avril 1990, page 150/151 XP000116206 RITTENBRUCH F -A: "SOLAR-AKKULADER MIT NUR EINER SOLARZELLE"
- PATENT ABSTRACTS OF JAPAN vol. 009, no. 207 (P-382), 24 Août 1985 & JP 60 069589 A (SUWA SEIKOSHA KK), 20 Avril 1985,

## Description

La présente invention concerne un appareil électronique comportant un accumulateur d'énergie électrique, des moyens d'affichage alimentés par l'accumulateur, et un dispositif de charge pourvu d'une source électrique à cellule photovoltaïque destinée à charger l'accumulateur.

L'invention concerne également une pièce d'horlogerie électronique, notamment une montre ou un réveil, comportant un tel dispositif de charge.

Toutefois, les applications de l'invention ne sont pas limitées au domaine de l'horlogerie, mais peuvent concerner tout appareil électronique comportant un accumulateur d'énergie électrique et une source électrique à cellule photovoltaïque destinée à charger l'accumulateur, par exemple une calculatrice électronique de poche ou de table, un émetteur ou récepteur radio, un appareil de télécommande par signaux infrarouges, un capteur, et de manière générale tout appareil à alimentation électrique autonome et tout dispositif accumulant de l'énergie électrique produite par des cellules solaires.

Actuellement, on tend à faire fonctionner les appareils électroniques à faible consommation à une tension d'alimentation aussi basse que possible, de l'ordre de 1,0 à 1,5 V, qui représente une limite inférieure actuelle du bon fonctionnement de certains composants électroniques. Cependant, les cellules photovoltaïques actuellement préférées pour alimenter ces dispositifs, qu'elles soient du type photochimique ou du type à semi-conducteur, ne fournissent généralement qu'une tension plus basse, typiquement de l'ordre de 0,3 à 0,5 V, de sorte qu'il est nécessaire de connecter au moins trois de ces cellules en série (voir par exemple la publication GB-A-2 149 942). Ces cellules sont généralement juxtaposées sur une face visible de l'appareil afin de bénéficier des mêmes conditions d'éclairement. Une telle disposition peut présenter des inconvénients. D'une part, dans les appareils miniaturisés, la fabrication d'une unité à plusieurs cellules de petite taille est plus coûteuse que celle d'une seule cellule plus grande. D'autre part, sur des objets où l'aspect esthétique est important comme dans le domaine de l'horlogerie, les lignes de séparation entre les cellules juxtaposées sont souvent gênantes et disparaîtraient si l'on pouvait utiliser une seule cellule, ou éventuellement deux cellules quasi transparentes superposées comme décrit dans le document WO 93/19405.

Dans l'application à une montre-bracelet, une source composée de plusieurs cellules photovoltaïques juxtaposées et connectées en série présente en outre l'inconvénient d'être sujette à un effet d'ombrage par les vêtements : si par exemple une manche de vêtement fait ombre sur l'une des cellules, la tension de celle-ci tombe fortement et donc la tension totale de sortie de l'ensemble des cellules peut tomber à une valeur insuffisante pour charger l'accumulateur.

On connaît un dispositif de charge comportant une seule cellule photovoltaïque pour charger un accumulateur Ni-Cd, par un article de Frank-André Rittenbruch, intitulé "Solar Akkulader mit nur einer Solarzelle", publié dans la revue "Elektronik", vol. 39, No. 9 du 27 avril 1990, pages 150 et 151. Ce dispositif a l'inconvénient de consommer du courant même lorsque l'accumulateur est complètement chargé. Par ailleurs, il faut veiller à ce que l'accumulateur ne soit jamais complètement déchargé, sinon le dispositif de charge ne peut pas redémarrer par lui-même.

Dans la demande de brevet DE-A-29 00 622, il est décrit un dispositif capable de charger un accumulateur au moyen d'une cellule solaire dont la tension de sortie est inférieure à la tension aux bornes de l'accumulateur, grâce à un convertisseur de tension comportant une inductance et une diode connectées en série entre la source électrique et l'accumulateur. La jonction entre l'inductance et la diode est reliée cycliquement à la terre par un transistor commandé par un dispositif à monostable. Celui-ci reçoit un signal d'entrée provenant d'un capteur photorésistant qui mesure l'éclairement auquel la cellule solaire est exposée. Quand l'éclairement augmente, la constante de temps du dispositif à monostable augmente, ce qui réduit la résistance de charge de la cellule solaire afin de l'optimiser.

Cependant, le dispositif ainsi décrit risque de consommer plus d'énergie qu'il n'en produit lorsque l'éclairement de la cellule est relativement faible, ce qui peut conduire finalement à une décharge de l'accumulateur. En outre, il est difficile d'optimiser son fonctionnement parce que les caractéristiques de réponse à l'éclairement de la cellule solaire et de la photorésistance sont généralement différentes. D'autre part, la présence de la photorésistance en tant qu'élément extérieur additionnel est désavantageuse à plusieurs titres, en particulier sur une montre, par la place qui doit lui être réservée, le coût de fabrication, ainsi que le risque d'être éclairée différemment de la cellule solaire.

Un but de la présente invention est d'éviter les inconvénients susmentionnés, en créant un dispositif de charge efficace, simple, peu coûteux et applicable avantageusement à une pièce d'horlogerie, en particulier à une montre.

Un but particulier consiste à agencer le dispositif de charge de façon qu'il consomme extrêmement peu d'énergie lorsque l'accumulateur est peu chargé et que la cellule photovoltaïque n'est que peu éclairée ou pas éclairée.

Un autre but particulier consiste, dans l'application du dispositif à une pièce d'horlogerie électronique, à combiner le dispositif avec les circuits consommateurs d'énergie de la montre de façon à éviter que l'accumulateur ne se décharge excessivement.

Selon l'invention, il est prévu un appareil électronique tel que spécifié dans la revendication 1.

Cette combinaison est spécialement avantageuse parce qu'elle évite une bobine d'induction supplémentaire pour le multiplicateur de tension. Or cette bobine est le seul composant relativement encombrant et lourd de celui-ci, alors que les autres composants sont réalisables dans un circuit intégré. La suppression d'une bobine simplifie aussi le montage de l'appareil. En particulier, si les moyens d'affichage comportent un moteur, ladite bobine peut faire partie de ce moteur.

De préférence, le dispositif de charge comporte des moyens de commande agencés pour enclencher et déclencher le multiplicateur de tension en fonction de la tension de sortie de la source électrique et en fonction d'un état de charge de l'accumulateur.

Ainsi, le fonctionnement du dispositif de charge peut être limité aux périodes favorables, lorsque la tension de la source électrique photovoltaïque est suffisante pour permettre de charger réellement l'accumulateur, et uniquement lorsque c'est nécessaire, notamment pour éviter une surcharge qui diminuerait la durée de vie de l'accumulateur.

Il est possible d'utiliser comme source électrique une seule cellule photovoltaïque fournissant une tension qui est seulement une fraction de la tension normale aux bornes de l'accumulateur. Le cas échéant, on peut aussi utiliser une source électrique comprenant au moins deux cellules photovoltaïques connectées en série, mais fournissant ensemble une tension qui peut être inférieure à la tension aux bornes de l'accumulateur.

La combinaison d'un dispositif de charge tel que défini ci-dessus avec une pièce d'horlogerie électronique est particulièrement avantageuse par le fait qu'elle permet d'utiliser une seule cellule photovoltaïque, même si cette cellule est d'un type ayant une tension de sortie relativement basse. Cela permet d'éviter des inconvénients exposés plus haut à propos de l'aspect esthétique et du coût de fabrication. Cela facilite aussi l'utilisation d'une cellule pratiquement transparente et invisible, recouvrant de préférence toute l'étendue des moyens d'affichage, du côté où ceux-ci sont visibles, et laissant au constructeur une liberté totale dans le choix de l'aspect extérieur du cadran et de la pièce d'horlogerie en général.

Les moyens de commande susmentionnés du dispositif de charge peuvent être combinés aux moyens électroniques classiques de la pièce d'horlogerie en vue d'économiser l'énergie lorsque l'état de charge de l'accumulateur est bas, notamment en bloquant l'alimentation des moyens d'affichage et/ou des moyens horométriques en fonction d'un ou plusieurs états limites de décharge de l'accumulateur, parallèlement au déclenchement du multiplicateur de tension.

D'autres caractéristiques et avantages de la présente invention apparaîtront dans la description suivante d'une forme de réalisation préférée, présentée à titre d'exemple uniquement et en référence aux dessins annexés, dans lesquels :
- la figure 1 est une vue partielle en coupe schématique d'une montre équipée d'un accumulateur électrique et d'un dispositif de charge à multiplicateur de tension selon l'invention;
- la figure 2 est un schéma bloc des circuits électriques de la montre, et
- la figure 3 représente schématiquement une forme de réalisation avantageuse du multiplicateur de tension.

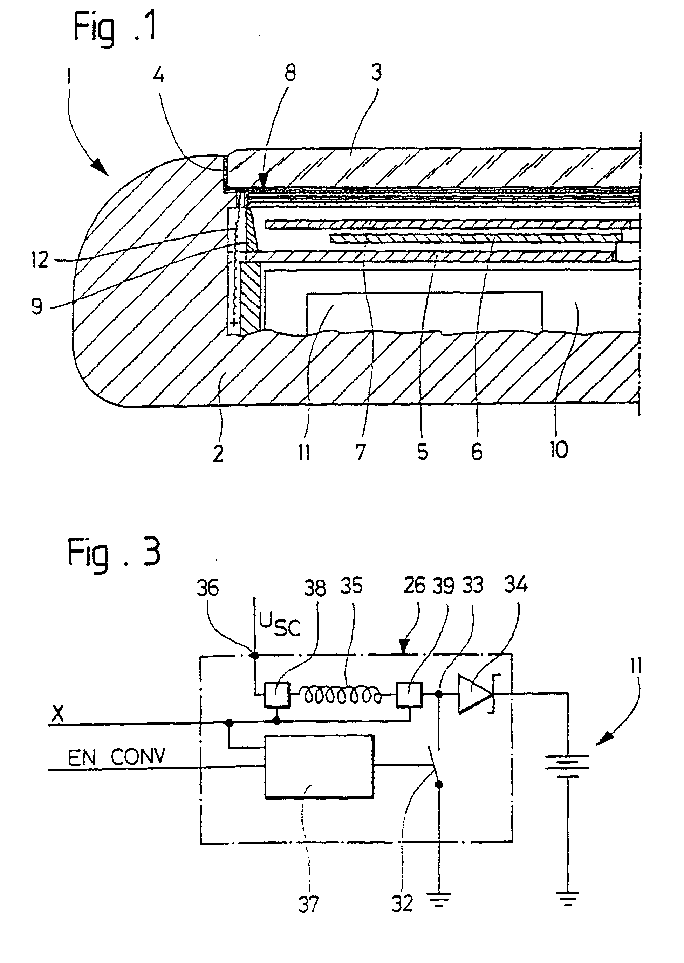

La montre 1 représentée schématiquement à la figure 1 comporte une boîte 2 sur laquelle est fixée une glace 3, par exemple par l'intermédiaire d'un joint 4. De manière classique, un utilisateur peut voir à travers la glace 3 des moyens d'affichage comprenant un cadran 5 et des aiguilles 6 et 7 se déplaçant devant le cadran. Une cellule photovoltaïque 8 est disposée par exemple entre les aiguilles et la glace 3, contre laquelle elle est maintenue appliquée par une bague 9 s'appuyant sur le cadran 5. Dans cet exemple, il s'agit d'une cellule photovoltaïque transparente dont la nature et la disposition sont décrites dans la publication WO 93/19405. Cette cellule recouvre entièrement les organes d'affichage, et grâce à sa transparence elle n'a aucune influence sur la lecture de l'heure et l'apparence du cadran. Lorsqu'elle reçoit de la lumière, sa tension de sortie varie approximativement entre 0,3 et 0,5 V selon l'éclairement. On notera que la cellule 8 pourrait aussi être placée sur le cadran 5 ou constituer le cadran lui-même. Dans ce cas, on pourrait utiliser une cellule opaque, notamment au silicium.

Au-dessous du cadran 5, la boîte 2 contient notamment un mouvement d'horlogerie électronique 10 et un accumulateur d'énergie électrique 11. Dans cet exemple, il s'agit d'un accumulateur chimique, de préférence du type à ions lithium, dont la tension de service est comprise entre 1,0 et 1,5 V. On notera toutefois que la présente invention est utilisable aussi avec d'autres types d'accumulateurs électriques et de capacités électrochimiques, notamment les super-condensateurs. Les électrodes de la cellule photovoltaïque 8 sont raccordées aux circuits électriques situés sous le cadran 5 par deux conducteurs 12 dont un seul est représenté dans la figure 1.

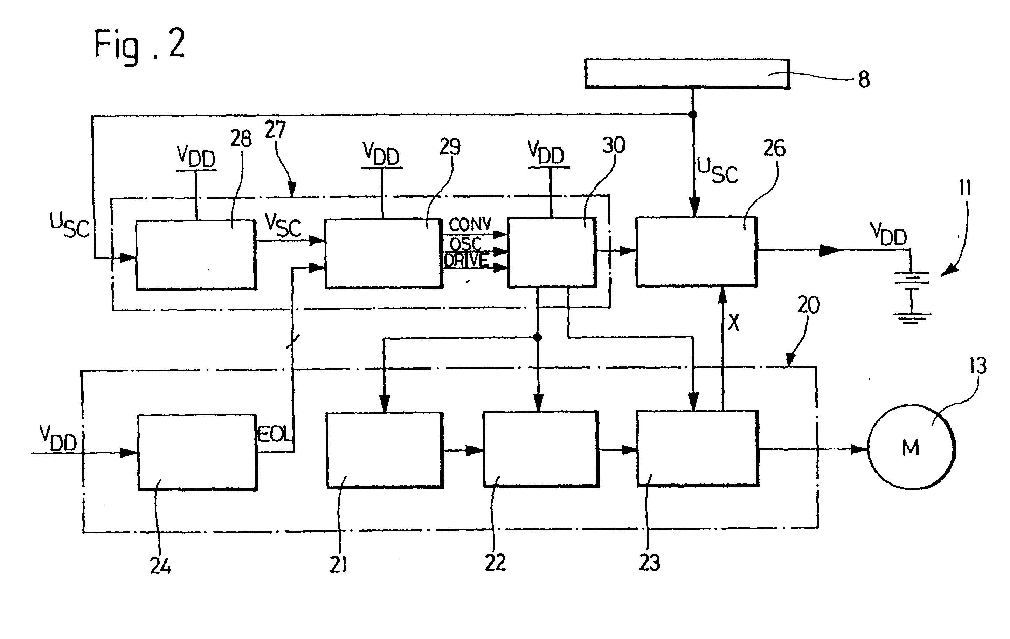

En référence à la figure 2, les moyens d'affichage de la montre 1 comportent un moteur pas à pas 13 qui entraîne les aiguilles 6 et 7 en utilisant l'énergie fournie par l'accumulateur 11. Le moteur 13 est commandé par un circuit intégré horométrique classique 20 comprenant un oscillateur 21, par exemple piloté par un résonateur à quartz, et une unité électronique 22 comprenant un circuit diviseur et des mémoires, associée à un circuit pilote 23 du moteur. Le signal de sortie de l'oscillateur 21 est traité par l'unité 22 qui commande de manière appropriée le circuit pilote 23 pour afficher l'heure sur le cadran 5 au moyen des aiguilles 6 et 7. Pour surveiller la tension V_{DD} aux bornes de l'accumulateur 11, le circuit intégré 20 comprend en outre un circuit de surveillance 24 qui compare cette tension à une ou plusieurs tensions limites et délivre en conséquence un signal numérique EOL pouvant prendre différentes valeurs indiquant que le niveau de tension de l'accumulateur se trouve au-dessus ou au-dessous de ces différentes limites. Les circuits de ce genre, appelés parfois "end of life" et destinés à indiquer si une pile arrive en fin de vie, sont bien connus dans le domaine de l'horlogerie.

Le dispositif de charge de l'accumulateur 11 comprend, outre la cellule photovoltaïque 8, un convertisseur DC/DC constitué par un multiplicateur de tension 26 et commandé par un bloc statique complémentaire 27. Le multiplicateur de tension 26 reçoit le courant continu de sortie de la cellule photovoltaïque 8, à tension variable U_{SC}. Quand il est enclenché, il multiplie cette tension, par exemple d'un facteur compris entre 2 et 4 selon son agencement, pour délivrer une tension de sortie supérieure à la tension existante V_{DD} de l'accumulateur 11.

Le bloc statique complémentaire 27 comprend un comparateur statique 28, une unité logique 29 et une unité de commutation 30, ces trois éléments étant alimentés par la tension V_{DD} de l'accumulateur. Dans cet exemple, le comparateur statique 28 comprend de préférence un circuit inverseur ou suiveur CMOS LV ayant une tension de commutation ajustée à 0,4 V. Cette valeur est choisie d'après les caractéristiques de tension de la cellule 8. Elle est fixée par les dimensions géométriques de la paire de transistors à canal p et à canal n de l'inverseur. Le comparateur 28 reçoit comme signal d'entrée la tension de sortie U_{SC} et, selon que cette tension est inférieure ou supérieure à la tension de commutation, délivre à l'unité logique 29 un signal de sortie binaire V_{SC} ayant la valeur 1 lorsque U_{SC} < 0,4 V, et la valeur 0 lorsque U_{SC} > 0,4 V. On notera que le comparateur statique 28 peut être remplacé par d'autres circuits de comparaison ayant un effet équivalent. Il a toutefois pour avantage d'éviter le recours à une source de tension de référence.

L'unité logique 29 reçoit les signaux V_{SC} et EOL et, en fonction en fonction de leurs états, délivre des signaux binaires de sortie CONV, OSC et DRIVE à l'unité de commutation 30, selon des règles logiques qui seront décrites plus loin. Ces signaux commandent des commutateurs électroniques dans l'unité 30 pour délivrer la tension V_{DD} respectivement au multiplicateur de tension 26, à l'ensemble de l'oscillateur 21 et de l'unité 22, et au circuit pilote 23 du moteur 13.

Dans une forme d'exécution du dispositif représenté à la figure 2, l'unité de surveillance 24 compare la tension V_{DD} de l'accumulateur 11 à une seule valeur limite, par exemple 1,0 V, c'est-à-dire que son signal de sortie EOL est un signal binaire. Les deux signaux binaires V_{SC} et EOL présents à l'entrée de l'unité logique 29 peuvent donc présenter quatre combinaisons possibles, correspondant aux quatre situations A à D représentées dans le tableau I, qui montre les valeurs que ce circuit attribue aux signaux CONV, OSC et DRIVE dans chaque situation. La valeur 1 représente l'enclenchement de l'organe correspondant, et la valeur 0 le déclenchement.

**Tableau I**

| Cas | U_{SC} ≥ 0,4 V | V_{DD} ≥ 1,0 V | CONV | OSC | DRIVE |
|---|---|---|---|---|---|
| A | Non | Non | 0 | 0* | 0 |
| B | Oui | Non | 1 | 0* | 0 |
| C | Non | Oui | 0 | 1 | 1 |
| D | Oui | Oui | 1 | 1 | 1 |

On remarque que le convertisseur ou multiplicateur de tension 26 n'est enclenché que lorsque la cellule 8 fournit une tension supérieure ou égale à 0,4 V. Avec le type d'accumulateur utilisé ici, il n'y a pas de risque de surcharge car la tension aux bornes de l'accumulateur complètement chargé monte jusqu'à près de 2 V, valeur qui ne peut pas être atteinte par la tension de la cellule après multiplication.

Au-dessous d'une valeur limite de 1,0 V aux bornes de l'accumulateur 11, les circuits horométriques 21 et 22 et les moyens d'affichage 23 et 13 sont déclenchés afin d'économiser l'énergie. Cette limite est choisie de façon à conserver entre 10% et 20% de la charge de l'accumulateur, afin de pouvoir faire encore fonctionner le dispositif de charge lorsque la cellule 8 reçoit de nouveau de la lumière après une longue période d'obscurité, pouvant aller jusqu'à une année, selon la valeur du courant d'auto-décharge de l'accumulateur.

Les signes * dans la colonne OSC signalent la possibilité d'une variante dans laquelle le circuit de surveillance 24 surveille deux tensions limites distinctes sur la courbe de décharge de l'accumulateur 11, par exemple une première limite à 1,1 V et une seconde limite à 1,0 V. Le signal EOL est alors un signal à plusieurs bits. Dans ce cas, dans un premier stade de décharge où la tension se trouve entre 1,1 et 1,0 V, l'unité logique 29 donne la valeur 0 au signal DRIVE afin de déclencher les éléments 23 et 13 qui consomment le plus de courant, c'est-à-dire que l'affichage est arrêté. Par contre les circuits horométriques 21 et 22 continuent de fonctionner pour que la montre reste à l'heure lorsque l'accumulateur sera rechargé. C'est seulement si la tension V_{DD} tombe au-dessous de 1,0 V que le signal OSC passe à 0 pour arrêter les circuits horométriques. La charge résiduelle de l'accumulateur est néanmoins suffisante pour alimenter le dispositif de charge lorsque la cellule photovoltaïque 8 sera de nouveau éclairée.

On notera que le circuit de surveillance 24 peut aussi indiquer par le signal EOL que le niveau de charge de l'accumulateur 11 est très élevé. L'unité logique 29 peut alors déclencher le multiplicateur de tension 26 par le signal CONV afin de ménager l'accumulateur.

La figure 3 illustre une forme d'exécution connue du multiplicateur de tension continue 26, comportant un interrupteur électronique 32 branché en parallèle à l'accumulateur 11 entre un noeud 33 et la masse, une diode Schottky 34 étant branchée en série entre le noeud 33 et l'accumulateur, tandis qu'une inductance 35 est branchée en série entre le noeud 33 et la borne d'entrée 36 qui reçoit la tension U_{SC} de la cellule photovoltaïque 8. L'interrupteur 32 est périodiquement ouvert et fermé par un circuit de commande 37 actionné par un signal de validation EN CONV provenant de l'unité de commutation 30. A chaque ouverture de l'interrupteur 32, le courant induit à tension élevée dû à l'inductance 35 charge l'accumulateur 11. L'interrupteur 32 et son circuit de commande 37 peuvent être réalisés par exemple au moyen d'un circuit du type MAX 631 de la société Maxim.

Un aspect avantageux de ce multiplicateur de tension consiste à utiliser comme inductance 35 la bobine d'induction du stator du moteur pas à pas 13 destiné normalement à entraîner des moyens d'affichage de la montre. Comme ce moteur ne fonctionne que pendant de courts instants pour l'affichage, il est possible de connecter sa bobine au multiplicateur de tension 26 en dehors de ces instants, c'est-à-dire la plupart du temps. On évite ainsi d'ajouter à la montre une bobine, qui est un organe relativement lourd et volumineux, pour réaliser le dispositif selon l'invention. La bobine sera alors précédée et suivie de dispositifs électroniques de commutation 38 et 39, agencés pour la relier alternativement au multiplicateur de tension 26 et au circuit du moteur 13 en fonction de signaux de commande X provenant du circuit pilote 23. On notera que le dispositif 39 n'est pas nécessaire dans tous les cas, grâce à la présence de la diode 34.

Le dispositif de charge pourrait aussi utiliser, au lieu de la bobine statorique du moteur 13, toute autre bobine existant déjà dans un autre dispositif de la pièce d'horlogerie, notamment un dispositif d'alarme, un transformateur de tension destiné à alimenter par exemple un organe électroluminescent, ou une bobine branchée en parallèle à un moteur piézo-électrique.

L'utilisation de la bobine du moteur ou d'un autre dispositif comme inductance 35 du convertisseur de tension permet une construction légère, peu encombrante et peu coûteuse, donc convenant bien aux applications horlogères, parce que les autres composants du convertisseur peuvent facilement être inclus dans un circuit intégré contenant le bloc statique 27, en particulier le circuit intégré 20 décrit plus haut.

Il faut remarquer que les applications de l'invention ne se limitent pas au cas des cellules photovoltaïques du type photochimique, mais s'étendent aussi à tout autre type, notamment aux cellules à silicium amorphe, monocristallin ou polycristallin.

## Revendications

1. Appareil électronique (1) comportant un accumulateur d'énergie électrique (11), des moyens d'affichage (6, 7, 13, 23) alimentés par l'accumulateur, et un dispositif de charge pourvu d'une source électrique à cellule photovoltaïque (8) destinée à charger l'accumulateur (11), **caractérisé en ce que** le dispositif de charge comporte un multiplicateur de tension (26) connecté en série entre la source électrique et l'accumulateur et comprenant une inductance (35) qui est constituée par une bobine faisant partie des moyens d'affichage ou d'un autre dispositif de l'appareil.

2. Appareil selon la revendication 1, **caractérisé en ce que** les moyens d'affichage comportent un moteur (13) et **en ce que** ladite bobine fait partie dudit moteur.

3. Appareil selon la revendication 1, **caractérisé en ce que** le dispositif de charge comporte des moyens de commande (24, 27) agencés pour enclencher et déclencher le multiplicateur de tension en fonction de la tension de sortie (U_{SC}) de la source électrique à cellule photovoltaïque (8).

4. Appareil selon la revendication 3, **caractérisé en ce que** lesdits moyens de commande (24, 27) sont agencés en outre pour bloquer l'alimentation des moyens d'affichage (6, 7, 13, 23) lorsque l'état de charge de l'accumulateur est inférieur à un premier état limite.

5. Appareil selon la revendication 4, **caractérisé en ce qu'**il comporte des moyens horométriques (21, 22) alimentés par l'accumulateur et **en ce que** lesdits moyens de commande (24, 27) sont agencés en outre pour bloquer l'alimentation des moyens horométriques (21, 22) lorsque l'état de charge de l'accumulateur est inférieur au premier état limite ou à un second état limite.

6. Appareil selon l'une des revendications 1 à 5, **caractérisé en ce que** la source électrique (8) comporte une ou plusieurs cellules photovoltaïques sensiblement transparentes s'étendant devant les moyens d'affichage, du côté où ceux-ci sont visibles.

7. Appareil selon l'une des revendications 1 à 5, **caractérisé en ce que** la source électrique (8) comprend une seule cellule photovoltaïque.

8. Appareil selon l'une des revendications 1 à 5, **caractérisé en ce que** la source électrique (8) comprend au moins deux cellules photovoltaïques connectées en série.

9. Appareil selon la revendication 3, **caractérisé en ce que** les moyens de commande (24, 27) comportent une unité de comparaison (28), agencée pour recevoir un signal analogique représentatif de la tension de sortie (U_{SC}) de la source électrique (8) et délivrer un signal binaire (V_{SC}) indiquant si ladite tension de sortie est supérieure ou inférieure à un seuil prédéterminé.

10. Appareil selon la revendication 9, **caractérisé en ce que** l'unité de comparaison (28) est un comparateur statique alimenté par l'accumulateur.

11. Appareil selon la revendication 10, **caractérisé en ce que** le comparateur statique (28) est un circuit CMOS inverseur ou suiveur, comportant au moins une paire de transistors complémentaires de types p et n, le comparateur statique ayant une tension de commutation qui est fixée par les dimensions géométriques desdits transistors.

12. Appareil selon la revendication 9, **caractérisé en ce que** les moyens de commande (24, 27) comportent un circuit de surveillance de tension (24), recevant en entrée la tension (V_{DD}) aux bornes de l'accumulateur et délivrant un signal de tension d'accumulateur (EOL), et un circuit logique (29) recevant ledit signal binaire (V_{SC}) et ledit signal de tension d'accumulateur (EOL) et délivrant au moins un signal de commande (CONV) pour enclencher ou déclencher le multiplicateur de tension.

13. Appareil selon l'une des revendications précédentes, sous forme d'une pièce d'horlogerie électronique, en particulier une montre ou un réveil.

## Patentansprüche

1. Elektronisches Gerät (1), das einen Akkumulator (11) für elektrische Energie, Anzeigemittel (6, 7, 13, 23), die von dem Akkumulator gespeist werden, sowie eine Ladevorrichtung, die mit einer Stromquelle mit photovoltaischer Zelle (8) versehen ist und dazu bestimmt ist, den Akkumulator (11) zu laden, umfasst, **dadurch gekennzeichnet, dass** die Ladevorrichtung einen Spannungsvervielfacher (26) umfasst, der zwischen die Stromquelle und den Akkumulator in Reihe geschaltet ist und eine Induktivität (35) enthält, die aus einer Spule gebildet ist, die einen Teil der Anzeigemittel oder einer anderen Vorrichtung des Geräts bildet.

2. Gerät nach Anspruch 1, **dadurch gekennzeichnet, dass** die Anzeigemittel einen Motor (13) umfassen und dass die Spule einen Teil des Motors bildet.

3. Gerät nach Anspruch 1, **dadurch gekennzeichnet, dass** die Ladevorrichtung Steuermittel (24, 27) umfasst, die so beschaffen sind, dass sie den Spannungsvervielfacher in Abhängigkeit von der Ausgangsspannung (U_{SC}) der Stromquelle (8) mit photovoltaischer Zelle ein- und ausschalten.

4. Gerät nach Anspruch 3, **dadurch gekennzeichnet, dass** die Steuermittel (24, 27) außerdem so beschaffen sind, dass sie die Speisung der Anzeigemittel (6, 7, 13, 23) blockieren, wenn der Ladezustand des Akkumulators unter einem ersten Grenzzustand liegt.

5. Gerät nach Anspruch 4, **dadurch gekennzeichnet, dass** es Zeitmessmittel (21, 22) umfasst, die von dem Akkumulator gespeist werden, und dass die Steuermittel (24, 27) außerdem so beschaffen sind, dass sie die Speisung der Zeitmessmittel (21, 22) blockieren, wenn der Ladezustand des Akkumulators unter dem ersten Grenzzustand oder unter einem zweiten Grenzzustand liegt.

6. Gerät nach einem der Ansprüche 1 bis 5, **dadurch gekennzeichnet, dass** die Stromquelle (8) eine oder mehrere photovoltaische Zellen umfasst, die im Wesentlichen lichtdurchlässig sind und sich vor den Anzeigemitteln auf derjenigen Seite erstrecken, auf der diese sichtbar sind.

7. Gerät nach einem der Ansprüche 1 bis 5, **dadurch gekennzeichnet, dass** die Stromquelle (8) eine einzige photovoltaische Zelle umfasst.

8. Gerät nach einem der Ansprüche 1 bis 5, **dadurch gekennzeichnet, dass** die Stromquelle (8) wenigstens zwei photovoltaische Zellen umfasst, die in Reihe geschaltet sind.

9. Gerät nach Anspruch 3, **dadurch gekennzeichnet, dass** die Steuermittel (24, 27) eine Vergleichseinheit (28) umfassen, die so beschaffen ist, dass sie ein analoges Signal empfängt, das die Ausgangsspannung (U_{SC}) der Stromquelle (8) empfängt und ein binäres Signal (V_{SC}) liefert, das angibt, ob die Ausgangsspannung oberhalb oder unterhalb eines vorgegebenen Schwellenwertes liegt.

10. Gerät nach Anspruch 9, **dadurch gekennzeichnet, dass** die Vergleichseinheit (28) ein statischer Komparator ist, der von dem Akkumulator gespeist wird.

11. Gerät nach Anspruch 10, **dadurch gekennzeichnet, dass** der statische Komparator (28) eine CMOS-Inverter- oder -Folgerschalter ist und wenigstens ein Paar komplementärer Transistoren des Typs p bzw. n umfasst, wobei der statische Komparator eine Umschaltspannung besitzt, die durch die geometrischen Abmessungen der Transistoren festgelegt ist.

12. Gerät nach Anspruch 9, **dadurch gekennzeichnet, dass** die Steuermittel (24, 27) eine Spannungsüberwachungsschaltung (24), die am Eingang die Spannung (V_{DD}) über den Anschlüssen des Akkumulators empfängt und ein Akkumulatorspannungssignal (EOL) liefert, und eine Logikschaltung (29), die das Binärsignal (V_{SC}) und das Akkumulatorspannungssignal (EOL) empfängt und wenigstens ein Steuersignal (CONV) liefert, um den Spannungsvervielfacher ein oder auszuschalten, umfassen.

13. Gerät nach einem der vorhergehenden Ansprüche in Form eines elektronischen Zeitmessgeräts, insbesondere eine Uhr oder ein Wecker.

## Claims

1. Electronic apparatus (1) including an electric energy accumulator (11), display means (6, 7, 13, 23) supplied by the accumulator, and a charging device provided with a photovoltaic cell power source (8) for charging the accumulator (11), **characterised in that** the charging device includes a voltage multiplier (26) connected in series between the electric power source and the accumulator and including an inductor (35) which is formed by a coil forming part of the display means or of another device of the apparatus.

2. Apparatus according to claim 1, **characterised in that** the display means include a motor (13) and **in that** said coil forms part of said motor.

3. Apparatus according to claim 1, **characterised in that** the charging device includes control means (24, 27) arranged for switching the voltage multiplier on and off as a function of the output voltage (U_{SC}) of the photovoltaic cell power source (8).

4. Apparatus according to claim 3, **characterised in that** said control means (24, 27) are also arranged for blocking the supply of the display means (6, 7, 13, 23) when the state of charge of the accumulator is less than a first limit state.

5. Apparatus according to claim 4, **characterised in that** it includes horometric means (21, 22) supplied by the accumulator and **in that** said control means (24, 27) are also arranged for blocking the supply of the horometric means (21, 22) when the state of charge of the accumulator is less than the first limit state or than a second limit state.

6. Apparatus according to any of claims 1 to 5, **characterised in that** the electric power source (8) includes one or more substantially transparent photovoltaic cells extending in front of the display means, on the side on which the latter are visible.

7. Apparatus according to any of claims 1 to 5, **characterised in that** the electric power source (8) includes a single photovoltaic cell.

8. Apparatus according to any of claims 1 to 5, **characterised in that** the electric power source (8) includes at least two photovoltaic cells connected in series.

9. Apparatus according to claim 3, **characterised in that** the control means (24, 27) include a comparison unit (28), arranged for receiving an analog signal representative of the output voltage (U_{SC}) of the electric power source (8) and providing a binary signal (V_{SC}) indicating whether said output voltage is more or less than a predetermined threshold.

10. Apparatus according to claim 9, **characterised in that** the comparison unit (28) is a static comparator supplied by the accumulator.

11. Apparatus according to claim 10, **characterised in that** the static comparator (28) is an inverter or follower CMOS circuit, including at least one pair of complementary p and n type transistors, the static comparator having a switching voltage which is fixed by the geometrical dimensions of said transistors.

12. Apparatus according to claim 9, **characterised in that** the control means (24, 27) include a voltage monitoring circuit (24), receiving as input the voltage (V_{DD}) across the terminals of the accumulator and supplying an accumulator voltage signal (EOL), and a logic circuit (29) receiving said binary signal (V_{SC}) and said accumulator voltage signal (EOL) and supplying at least one control signal (CONV) to switch the voltage multiplier on or off.

13. Apparatus according to any of the preceding claims in the form of an electronic timepiece, in particular a watch or an alarm clock.
